# FASCICULE DE BREVET EUROPEEN

(11) **EP 3 290 270 B1**
(45) Date de publication et mention de la délivrance du brevet: **26.10.2022**
(21) Numéro de dépôt: 17184938.3
(22) Date de dépôt: 04.08.2017
(51) Int. Cl.: B60Q 1/068, B60Q 1/076

(54) **DISPOSITIF LUMINEUX DE VÉHICULE AUTOMOBILE**
LEUCHTVORRICHTUNG FÜR KRAFTFAHRZEUG
LIGHT DEVICE OF A MOTOR VEHICLE

(30) Priorité: 01.09.2016 FR 1658122
(43) Date de publication de la demande: 07.03.2018
(73) Titulaire: Valeo Vision, 93012 Bobigny Cedex (FR)
(72) Inventeur: MADELAINE, Mehdi, 49000 ANGERS (FR); THIMOUY, Jean-Christophe, 49000 ANGERS (FR)
(74) Mandataire: Valeo Visibility

(56) Documents cités:
- EP-A1- 2 394 850
- EP-A1- 2 796 320
- US-A1- 2015 117 043

## Description

La présente demande concerne un dispositif lumineux pour véhicule, comprenant deux modules lumineux montés sur un même support par l'intermédiaire d'éléments de pivotement. Les éléments de pivotement permettent de régler l'inclinaison des modules lumineux par rapport au support, afin de s'assurer que la route est éclairée de façon adéquate par les modules lumineux, sans gêner les autres utilisateurs.

Le document EP1391347 décrit un exemple de ce type de dispositif lumineux, avec un boîtier comprenant un module de feu de croisement et un module de feu de route. Une tige est agencée dans le boîtier pour relier le module de feu de croisement au module de feu de route, respectivement articulés sur le boîtier. Lorsque le module de feu de croisement est incliné vers la route par l'intermédiaire de dispositifs de commande appropriés, le module de feu de route est automatiquement incliné dans les mêmes proportions. La tige transmet directement le mouvement de basculement d'un module à l'autre module et permet ainsi de régler simultanément l'inclinaison des feux à partir d'un seul dispositif de réglage.

La tige s'étend entre les faces latérales en regard des modules, qui sont disposés de manière décalée dans la direction longitudinale, c'est-à-dire la direction principale d'émission de la lumière en sortie des modules lumineux. Il en résulte que la tige s'étend au moins en partie en aval d'une des faces avant d'un des modules, ce qui présente le risque qu'une partie de la lumière émise par ce module soit déviée par la tige vers une direction non souhaitée, susceptible de gêner d'autres utilisateurs de la route.

Par ailleurs, un agencement selon l'art antérieur implique que la tige exerce un effort latéral sur chacun des modules, et il est nécessaire que les parois latérales des modules soient suffisamment proches afin de permettre à la tige d'appliquer une force dans la même direction pour l'un et l'autre des modules lumineux.

Le document EP2796320 décrit également un dispositif lumineux comportant deux modules lumineux chacun réglable en position.

La présente demande vise à résoudre les inconvénients mentionnés ci-dessus et, plus particulièrement, à proposer un dispositif lumineux pour véhicule permettant de régler de façon synchronisée l'angle d'inclinaison de deux modules lumineux sans modifier le faisceau de lumière global qui résulte de l'addition des faisceaux intermédiaires respectivement obtenu par chaque module lumineux, tout en permettant un plus grand degré de liberté dans l'agencement des modules dans le dispositif.

Dans ce contexte, la présente invention propose un dispositif lumineux de véhicule automobile selon la revendication 1, comprenant un support et deux modules lumineux distincts. Chaque module lumineux est monté sur le support par l'intermédiaire d'éléments de pivotement définissant un axe de rotation propre à chaque module. Notamment, on peut prévoir que les axes de rotation définis par ces éléments de pivotement sont parallèles entre eux.

Des éléments d'entraînement reliant les deux modules lumineux sont prévus pour entraîner en pivotement un premier module lumineux en fonction du pivotement d'un deuxième module lumineux.

Le dispositif lumineux se caractérise en ce qu'il comprend un dispositif d'actionnement configuré pour exercer une première force, selon une première direction, sur le deuxième module lumineux, les éléments d'entraînement étant eux configurés pour transformer la première force en une deuxième force, exercée, selon une deuxième direction distincte de la première direction de la première force, sur le premier module lumineux. De la sorte, lorsque le dispositif d'actionnement exerce la première force sur le deuxième module, il en résulte de façon simultané l'exercice d'une deuxième force sur le premier module lumineux.

On peut ainsi faire pivoter dans le même sens les deux modules lumineux par rapport au support, de manière à régler simultanément vers le haut ou vers le bas la portion du faisceau d'éclairage réalisée distinctivement par l'un et l'autre des modules.

L'invention permet ainsi de régler automatiquement l'inclinaison des deux modules lumineux en appliquant sur l'un des modules une force selon une direction différente par rapport à la force appliquée par le dispositif d'actionnement sur les éléments d'entraînement. De ce fait, les éléments d'entraînement permettent une plus grande liberté d'agencement des modules entre eux car, contrairement au dispositif utilisé dans le document EP1391347, il n'est pas nécessaire que l'un des modules soit en retrait par rapport à l'autre pour s'assurer que le mouvement de pivotement d'un module soit correctement transmis à l'autre module.

Selon un mode de réalisation préféré, la première et la deuxième force sont exercées selon des directions perpendiculaires ou sensiblement perpendiculaires. Ce mode de réalisation permet aux éléments d'entraînement d'appliquer la première et la deuxième force sur des faces différentes des modules lumineux, ce qui offre une plus grande liberté dans l'agencement des modules lumineux.

Le premier module lumineux est monté pivotant sur le support autour d'un premier axe de rotation et le deuxième module lumineux est monté pivotant sur le support autour d'un deuxième axe de rotation. Chacune de ces liaisons pivot ainsi défini peut notamment être réalisée par la mise en œuvre de deux liaisons rotule dont l'alignement définit le premier ou le deuxième axe de rotation. Selon une caractéristique de l'invention, le premier axe de rotation défini par la première liaison pivot est parallèle au deuxième axe de rotation défini par la deuxième liaison pivot. On peut notamment prévoir que le premier axe de rotation définissant la première liaison pivot est décalé selon la première direction par rapport au deuxième axe de rotation définissant la deuxième liaison pivot.

Les éléments d'entraînement comprennent au moins une première platine sur laquelle est fixé le deuxième module lumineux. Notamment, le deuxième module lumineux peut être fixé sans liberté de mouvement. La première platine est montée pivotante sur le support autour du deuxième axe de rotation définissant la liaison pivot du deuxième module lumineux sur le support. De préférence, le deuxième module est fixé sur la première platine de sorte que la direction d'émission de son faisceau lumineux soit perpendiculaire ou sensiblement perpendiculaire au deuxième axe de rotation.

Tel qu'il a été précédemment décrit, le dispositif d'actionnement est configuré pour exercer la première force, selon la première direction, sur le deuxième module lumineux par l'intermédiaire de la première platine.

Par ailleurs, les éléments d'entraînement comprennent en outre une deuxième platine reliée à la première platine et configurée pour exercer la deuxième force selon la deuxième direction sur le premier module lumineux. La deuxième platine est liée au premier module lumineux, notamment par l'intermédiaire d'une liaison rotule.

Cette deuxième platine est montée pivotante sur le support autour d'un troisième axe de rotation, qui peut être parallèle, et notamment décalé, par rapport au deuxième axe de rotation.

Selon une caractéristique de l'invention, la deuxième platine est reliée à la première platine par l'intermédiaire d'une liaison glissière. La liaison glissière peut permettre un mouvement de translation de la deuxième platine par rapport à la première platine dans une direction perpendiculaire ou sensiblement perpendiculaire au deuxième axe de rotation du deuxième module lumineux.

La première platine et la deuxième platine sont reliées avec un jeu pour permettre l'entraînement de l'une par l'autre alors qu'elles sont chacune pivotante autour d'un axe de rotation qui leur est propre, sans être pour autant bloquées.

Notamment, la liaison glissière peut être située entre le premier axe de rotation définissant la première liaison pivot et le troisième axe de rotation définissant la troisième liaison pivot. La deuxième platine forme dans ce cas un bras de levier permettant de faciliter la transmission d'efforts.

Selon différentes caractéristiques de l'invention, prises seules ou en combinaison, on pourra prévoir que :
- le dispositif d'actionnement exerce la première force sur la première platine en un point réglable, la liaison glissière étant centrée sur un quatrième axe défini entre ce point réglable et un élément de pivotement de la deuxième liaison pivot ;
- la deuxième platine comprend un appendice destiné à appliquer la deuxième force sur le premier module lumineux, via un organe de liaison, et l'appendice est configuré pour que l'organe de liaison soit disposé entre la première liaison pivot et la troisième liaison pivot ; ici, on entend préciser la position longitudinale de l'organe de liaison par rapport aux axes de rotation définis par les liaisons pivot propres à la deuxième platine et au premier module lumineux. L'appendice est configuré, notamment courbé, pour que son extrémité libre portant l'organe de liaison sphérique soit situé sous le premier module, longitudinalement en avant de la troisième liaison pivot assurant le pivotement de la deuxième platine et longitudinalement en retrait de la première liaison pivot assurant le pivotement du premier module ;
- la deuxième platine comprend un plateau servant de support pour un dispositif de ventilation d'au moins le premier module lumineux ;
- les éléments d'entraînement sont en retrait des faces des modules lumineux émettant de la lumière, de sorte qu'on peut ainsi éviter que le moyen de liaison réfléchisse ou masque une partie du faisceau lumineux d'un module plus en retrait ;
- chaque module lumineux est configuré pour participer à la projection d'un faisceau de feu de route et/ou de feu de croisement ;
- les surfaces des éléments d'entraînement agencés transversalement entre les deux modules lumineux sont traitées, et sont par exemple opaques de sorte à ne pas réfléchir la lumière provenant de l'extérieur du phare.

La présente demande concerne également un phare pour véhicule comprenant l'un des dispositifs lumineux décrit ci-dessus.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres.

Les caractéristiques de l'invention mentionnées ci-dessus ainsi que d'autres, apparaîtrons plus clairement à la lecture de la description détaillée ci-dessous, se référant aux dessins annexés suivants :
- la figure 1 est une vue arrière de trois quart d'un dispositif lumineux selon l'invention ;
- la figure 2 est une vue arrière du dispositif lumineux représenté à la figure 1 sans son support, afin de faciliter la compréhension de l'invention par le lecteur ; et
- la figure 3 est une coupe latérale d'un phare pour véhicule comprenant le dispositif lumineux représenté aux figures précédentes.

Dans la description qui va suivre, on se référera à une orientation en fonction des axes longitudinaux L, verticaux V et transversaux T, tels qu'ils sont définis arbitrairement par le trièdre L,V,T représenté sur les figures. L'axe longitudinal L correspond à la direction d'émission principale des rayons émis par le dispositif lumineux selon l'invention.

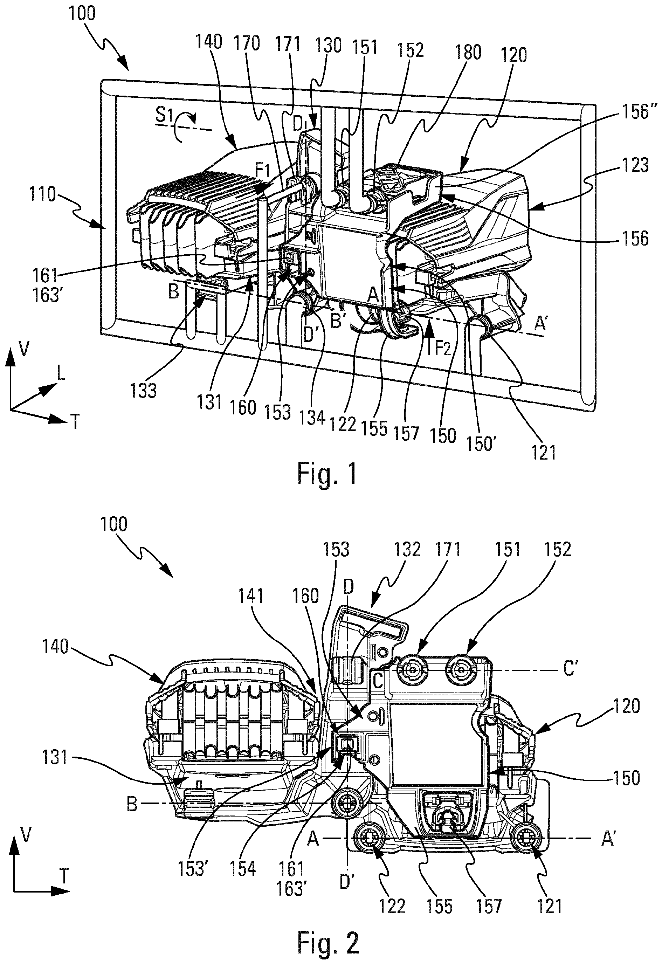

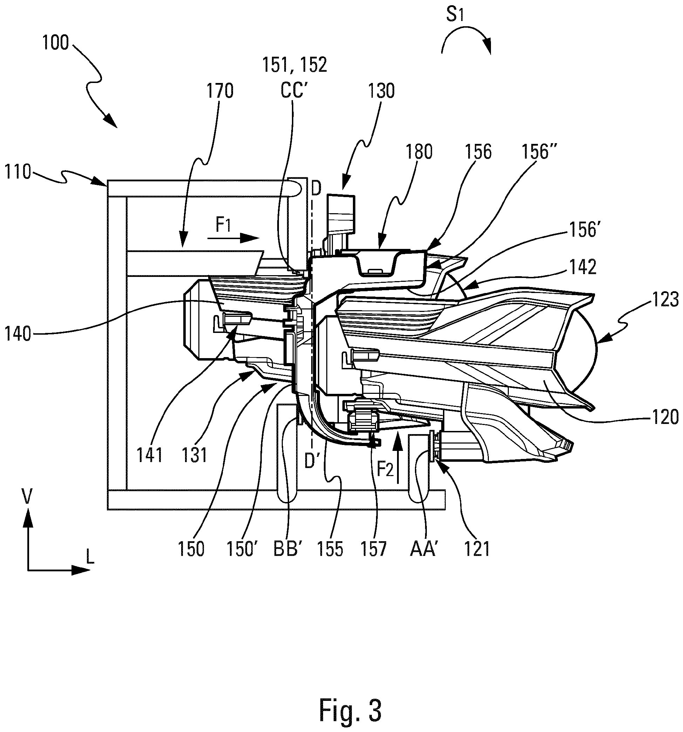

Un dispositif lumineux 100 selon la présente invention comporte un support 110, représenté schématiquement sur les figures 1 et 3, sur lequel sont fixés deux modules lumineux distincts, parmi lesquels on distingue un premier module 120 et un deuxième module 140 lumineux. Ces deux modules sont décalés l'un par rapport, aussi bien transversalement (tel que visible sur la figure 1), c'est-à-dire que l'un des modules est disposé vers le centre du véhicule et l'autre vers l'extérieur du véhicule, que verticalement ou longitudinalement (tel que visible sur la figure 3 notamment).

Sans sortir du contexte de l'invention, chaque module lumineux peut consister en un module émetteur d'un faisceau Code et/ou Route, que l'on souhaite pouvoir faire pivoter autour d'un axe transversal sensiblement horizontal, de manière à régler la hauteur des faisceaux projetés, par exemple en fonction de l'assiette du véhicule.

Le premier module lumineux 120 est fixé au support 110 par l'intermédiaire d'éléments de pivotement, et plus particulièrement de deux premiers éléments de liaison rotule 121 et 122, configurés pour former une première liaison pivot configurée pour permettre le pivotement du module lumineux selon un premier axe de rotation (AA'). On peut noter que le premier axe de rotation (AA') est parallèle ou sensiblement parallèle au plan défini par la face avant 123 par laquelle la lumière est émise par le premier module 120 lumineux.

Tel que cela est visible sur les figures, le premier axe de rotation (AA') est disposé en partie basse du premier module 120 lumineux. On définira par la suite la notion de partie basse en regard des autres axes de rotation du dispositif.

Le deuxième module lumineux 140 est fixé au support 110 par l'intermédiaire d'une première platine 130, qui comporte d'une part un plateau 131, sur lequel est fixé le deuxième module 140 lumineux, et d'autre part un bras 132 s'étendant le long d'une face latérale 141 du deuxième module, selon une direction sensiblement perpendiculaire au plateau 131.

La première platine 130 est fixée au support 110 par l'intermédiaire d'un point de fixation réglable 171 et de deux points de fixation fixes, parmi lesquels un élément de liaison pivot 133 et un élément de liaison sphérique 134, qui forment des éléments de pivotement définissant un deuxième axe de rotation (BB') de la première platine sur le support et donc une deuxième liaison pivot.

Par point de fixation fixe, on entend que le centre de la liaison reste immobile par rapport à une position d'origine, et au cours du déplacement relatif de la première platine par rapport au support, tandis que par point de fixation réglable, on entend que le centre de la liaison peut être déplacé par rapport à une position d'origine.

Les points fixes sont agencés de manière à former cette deuxième liaison pivot et permettre, notamment sous l'effet d'un effort exercé au niveau du point de fixation réglable, le pivotement de la première platine 130 autour d'un deuxième axe (BB') de rotation qui est parallèle au premier axe (AA') décrit précédemment. Le deuxième module 140 est fixé sur le plateau 131 de sorte qu'il suit le pivotement de la première platine 130 et de sorte que sa face avant 142, par laquelle est émise la lumière, soit parallèle au deuxième axe de rotation (BB').

Tel que cela est visible sur les figures, le deuxième axe de rotation (BB') est disposé en partie basse du deuxième module 140 lumineux. On définira par la suite la notion de partie basse en regard des autres axes de rotation du dispositif.

Selon l'invention, le dispositif lumineux comporte un dispositif d'actionnement 170 et des éléments d'entraînement reliant les deux modules entre eux.

Dans l'exemple illustré, le dispositif d'actionnement 170 est agencé au voisinage du point de fixation réglable 171. Il peut notamment comporter une tige de sortie d'un vérin, représentée schématiquement sur les figures 1 et 3, et pilotée en translation par des instructions de commande en provenance d'un module de commande approprié. Le déplacement en translation de la tige du dispositif d'actionnement 170 exerce sur le point de fixation réglable 171, et la première platine 130 qui porte celui-ci, une première force F1, orientée selon une première direction perpendiculaire au deuxième axe de rotation (BB') de la deuxième liaison pivot et sensiblement longitudinale.

Les éléments d'entraînement selon l'invention comportent le cas échéant la première platine 130, ainsi qu'au moins une deuxième platine 150, d'une part reliée à la première platine et d'autre part fixée au support 110 par l'intermédiaire d'éléments de pivotement et plus particulièrement de deux deuxièmes éléments de liaison rotule 151 et 152. Les deux deuxièmes éléments de liaison rotule 151, 152 associés à la deuxième platine 150 forment une troisième liaison pivot, configurée pour permettre le pivotement de la deuxième platine selon un troisième axe (CC') de rotation, notamment parallèle aux axes précédemment décrits (AA'), (BB').

Tel que cela est visible sur les figures, le troisième axe de rotation (CC') est disposé en partie haute de la deuxième platine 150. On définira par la suite la notion de partie haute en regard des autres axes de rotation du dispositif.

La deuxième platine 150 est agencée dans le dispositif lumineux 100 de manière à être positionnée à l'arrière du premier module 120, c'est-à-dire positionnée à l'opposé de la face avant 123 du module par rapport à la direction longitudinale définie ici par le trièdre L,V,T. La deuxième platine 150 comprend au moins un bras de connexion 153 s'étendant en direction de la face latérale 141 du deuxième module 140 qui est en vis-à-vis du premier module 120. Plus exactement, le bras de connexion s'étend de manière à présenter une portion de recouvrement 153' d'une partie du bras 132 de la première platine 130.

La deuxième platine 150 est jointe à la première platine 130 au niveau de cette portion de recouvrement 153', par l'intermédiaire d'une liaison glissière 160, formée par la coopération d'un ergot 161, solidaire du bras 132, et d'une fente 154 ménagée à cet effet dans le bras de connexion 153 et dans laquelle est retenue en coulissement une tête 163 formée à l'extrémité libre de l'ergot. Dans l'exemple illustré, la fente 154 débouche sur un bord du bras de connexion153 et la tête 163 de l'ergot 161 est insérée par l'extrémité débouchante de la fente. On comprend que sans sortir du contexte de l'invention, on pourrait prévoir une lumière ménagée dans le bras de connexion et une tête 163 de l'ergot montée par encliquetage élastique dans cette lumière, dès lors que la tête peut coulisser à l'intérieur de la lumière.

La fente 154 est configurée pour permettre le déplacement de la tête 163 de l'ergot le long du bras de connexion 153. Plus précisément, la fente définit un chemin de guidage qui s'étend selon un quatrième axe (DD') perpendiculaire au deuxième axe de rotation (BB') et au troisième axe de rotation (CC'). Par ailleurs, la portion de recouvrement 153' du bras de guidage 153, et à tout le moins la fente 154, est positionnée verticalement entre le deuxième axe de rotation (BB') et le troisième axe de rotation (CC'). Tel que cela sera notamment explicité plus en détails ci-après dans la description du fonctionnement du dispositif, la position de cette portion de recouvrement permet la formation d'un bras de levier qui facilite la transformation des mouvements d'un module à l'autre.

La deuxième platine 150 présente sensiblement une forme en U, avec une base 150' qui s'étend en regard d'une face arrière, opposée à la face avant 123, du premier module 120, et qui est prolongée à chacune de ses extrémités verticales par une ailette. Dans l'exemple illustré, la base 150' et le bras de connexion s'étendent dans le prolongement l'un de l'autre, dans un même plan.

Une ailette supérieure de cette deuxième platine prolonge sensiblement perpendiculairement la base 150', en formant un plateau 156 qui s'étend au-dessus du premier module 120 et qui est configuré pour servir de support à un ventilateur 180 formant organe de refroidissement d'au moins le premier module. Le plateau 156 est défini par une paroi de fond 156' et par des parois de butée 156", dont au moins une paroi de butée arrière qui s'étend dans le prolongement du plan défini par la base 150' et qui porte les deux deuxièmes éléments de liaison rotule 151 et 152, formant la troisième liaison pivot d'axe (CC').

Une ailette inférieure de cette deuxième platine prolonge la base 150' à l'opposé du plateau 156, en formant un appendice 155 recourbé à l'extrémité libre de laquelle est disposé un organe de liaison sphérique 157 avec le premier module 120 lumineux.

Tel que cela a été précisé précédemment, le dispositif d'actionnement 170 s'étend entre le support 110 et le deuxième module lumineux 140, par l'intermédiaire de la première platine 130. Plus précisément, le dispositif d'actionnement 170 est agencé pour pousser sur la première platine 130 au niveau du point de fixation réglable 171, de manière à faire pivoter de façon réversible la première platine autour du deuxième axe (BB'). Par pivotement réversible, on comprend que lorsque le dispositif d'actionnement 170 applique une première force sur la première platine selon un premier sens, dans la première direction, la première platine pivote autour du deuxième axe de rotation selon un premier sens de rotation, et que lorsque ce dispositif d'actionnement 170 applique une première force sur la première platine selon un sens inverse au premier sens, toujours dans la première direction, la première platine pivote autour du deuxième axe de rotation selon un sens de rotation inverse au premier sens de rotation. On peut ainsi faire pivoter le deuxième module lumineux et par extension le premier module, en fonction des instructions de commande reçues par le dispositif d'actionnement, dans un sens ou dans l'autre, de manière à faire pointer le faisceau émis par chacun de ces modules plus ou moins loin sur la scène de route.

Il peut être noté, notamment sur la figure 3, que le dispositif est configuré pour que le point de fixation réglable 171 soit centré sur le quatrième axe (DD'). Le point de fixation réglable 171 est positionné sur cet axe de sorte que l'ergot 160 soit situé entre ce point de fixation réglable et l'élément de liaison sphérique 134. De préférence, le point de fixation réglable 171 est positionné à la hauteur du troisième axe (CC').

Par ailleurs, il peut être noté, notamment sur la figure 2, que les première et deuxième liaison pivot, d'axe respectif le premier axe (AA') et le deuxième axe (BB'), sont disposées en partie basse du dispositif tandis que la troisième liaison pivot de troisième axe (CC') est disposée en partie haute du dispositif, les parties basse et haute du dispositif pouvant être distinguées comme s'étendant de part et d'autre d'un plan horizontal passant sensiblement par la liaison glissière 160 et notamment la tête 163 de l'ergot 160.

On va maintenant décrire le fonctionnement du basculement des modules lumineux dans le dispositif selon l'invention, dans un contexte arbitraire dans lequel on souhaite abaisser le faisceau d'éclairage émis par les modules.

Une première force F1 est appliquée sur le bras 132 par l'intermédiaire du dispositif d'actionnement 170, au niveau du point de fixation réglable 171. La force est, dans le contexte arbitraire défini précédemment, telle que la tige du dispositif d'actionnement pousse sur la première platine 130. Celle-ci pivote alors autour de son axe (BB') de rotation dans un premier sens S1, sens horaire si l'on se réfère à l'orientation du dispositif visible sur les figures 1 et 3. Le pivotement du plateau 131, solidaire en rotation de la première platine, dans ce même premier sens, ici horaire, génère le pivotement du deuxième module 140 fixé sur le plateau 131 et l'inclinaison du faisceau lumineux émis par ce deuxième module.

Simultanément, les éléments d'entraînement, et notamment la première platine et la deuxième platine, agissent pour permettre le basculement du deuxième module lumineux dans le même premier sens S1 et dans les mêmes proportions que ceux du basculement du premier module lumineux.

Le pivotement du bras 132 autour du deuxième axe (BB') entraîne en déplacement l'ergot 161 et la tête 163 retenue par ailleurs dans la fente 154 ménagée dans le bras de connexion 153 solidaire de la deuxième platine 150. Localement, au niveau de l'ergot et de la fente, la deuxième platine 150 est entraînée de façon similaire à la première platine 130. La deuxième platine 150 est articulée sur le support 110 de manière à pouvoir pivoter autour du troisième axe (CC') de rotation, de sorte que le déplacement local du bras de connexion 153 génère un pivotement de la deuxième platine 150 autour de ce troisième axe. On constate que la position de la portion de recouvrement 153', c'est-à-dire la zone de liaison entre la première platine et la deuxième platine, est prévue entre le deuxième axe (BB') et le troisième axe (CC'), de sorte que le pivotement dans un sens, horaire ou antihoraire, de la première platine autour du deuxième axe (BB') se transforme en un pivotement dans un sens inverse, antihoraire ou horaire, de la deuxième platine autour du troisième axe (CC').

Dans le contexte arbitraire choisi précédemment, la deuxième platine 150 pivote dans le sens antihoraire, inverse au premier sens S1, autour du troisième axe (CC') défini par la liaison pivot formée par les deux deuxièmes éléments de rotules 151,152.

De ce fait, l'appendice 155 de la deuxième platine est déplacé et l'organe de liaison sphérique 157 avec le premier module 120 lumineux qui est porté à l'extrémité libre de l'appendice se déplace également, en exerçant une deuxième force F2 sur le premier module 120 selon une deuxième direction, qui est perpendiculaire, ou sensiblement perpendiculaire à la première direction selon laquelle est exercée la première force F1 sur le deuxième module. Dans le contexte arbitraire choisi précédemment, la deuxième force F2 est exercée de manière à pousser sous le premier module lumineux, en visant à l'éloigner de l'appendice.

La deuxième force F2 s'exerce selon une telle deuxième direction du fait de l'agencement de l'appendice recourbée, et de la position sous le premier module 120 de l'organe de liaison sphérique 157, longitudinalement en avant par rapport au troisième axe (CC'). Par longitudinalement en avant, on comprend que l'organe de liaison sphérique 157 est situé plus près de la face avant 123 du premier module 120 que les deux deuxièmes éléments de rotule 151,152.

On peut noter la position de l'organe de liaison sphérique 157 par rapport aux deux premiers éléments de rotule 121,122 définissant le premier axe de rotation (AA'), à savoir une position longitudinale de l'organe de liaison sphérique en retrait par rapport au premier axe de rotation (AA'). L'organe de liaison sphérique 157, porté en extrémité de l'appendice 155, se situe entre la première liaison pivot, formée par les deux premiers éléments de rotule 121, 122, et la troisième liaison pivot formée par les deux deuxièmes éléments de rotule 151, 152.

Du fait de cette position, le mouvement de basculement de la deuxième platine implique une poussée exercée vers le haut sous le premier module lumineux 120, c'est-à-dire dans le sens de la flèche F2 illustrée sur la figure 3, et cette poussée entraîne un pivotement du premier module lumineux 120 autour du premier axe de rotation (AA'), dans le même premier sens S1 que le sens de pivotement du deuxième module 130.

L'invention permet ainsi de transmettre au deux modules lumineux 120 et 140 un mouvement de pivotement synchronisé et identique, permettant de régler en même temps l'inclinaison des faisceaux lumineux que les modules projettent.

Dans le fonctionnement qui vient d'être décrit, il convient de noter la deuxième platine sert d'élément intermédiaire entre l'ensemble formé par le deuxième module lumineux 140 et la première platine 130 d'une part et le premier module lumineux 120 d'autre part.

Lorsque la deuxième platine 150 pivote par l'intermédiaire de la troisième liaison pivot, le plateau 156 suit le pivotement. Dans le sens de pivotement antihoraire précédemment décrit, le plateau 156, situé longitudinalement en avant de la troisième liaison pivot formée par les deux deuxièmes éléments de rotule 151, 152, se déplace en s'écartant de la position du premier module lumineux 120. On crée ainsi un dégagement permettant par la suite le pivotement, dans le sens de pivotement horaire, du premier module lumineux 120 sans que l'arrière de ce premier module lumineux n'entre en contact avec la paroi de fond 156' du plateau 156.

Sur la figure 3, on a rendu particulièrement visible la caractéristique selon laquelle chacun des éléments formant les éléments d'entraînement, à savoir ici notamment la première platine 130 et la deuxième platine 150, sont agencés en retrait, dans la direction longitudinale, des faces avant 123, 143 respectives des modules lumineux par lesquelles sont susceptibles d'être émise la lumière. En d'autres termes, la partie la plus avancée de ces éléments d'entraînement, ici l'extrémité libre du plateau 156, est située en retrait de la face d'émission de rayons lumineux la plus reculée. De la sorte, aucun rayon émis par l'un des modules lumineux ne risque d'être dévié par des éléments formant les éléments d'entraînement, non configurés pour participer à la formation d'un faisceau lumineux règlementaire.

On pourra notamment dans ce cas prévoir de configurer la face avant de chacun des éléments formant les éléments d'entraînement pour générer une fonction esthétique. Ces faces, pouvant être visibles par un tiers depuis l'extérieur du véhicule, pourront par exemple être opaques, ou présenter un état de surface particulier.

Tel que cela a pu être déjà précisé précédemment, le dispositif lumineux selon l'invention, notamment par l'agencement des éléments d'entraînement permettant la transformation de direction des forces exercées sur l'un et l'autre des modules lumineux, permet de déplacer simultanément les deux modules lumineux en pivotement, tout en escamotant les éléments composant ces éléments d'entraînement. Il convient de noter que la configuration décrite permet d'ajuster facilement les dimensions des platines et donc des éléments d'entraînement, ce qui permet de prévoir une plus grande liberté dans l'agencement des modules entre eux, et notamment dans des écartements plus ou moins grand, sans que la fragilité des éléments d'entraînement soient mise en cause.

## Revendications

1. Dispositif lumineux (100) de véhicule automobile comprenant un support (110), un premier module lumineux (120) et un deuxième module lumineux (140) distinct du premier module lumineux, chaque module lumineux étant monté sur le support (110) par l'intermédiaire d'éléments de pivotement (121, 122, 133, 134) définissant un premier axe de rotation (AA') et un deuxième axe de rotation (BB'), propres à chacun des modules, et dans lequel des éléments d'entraînement reliant les deux modules lumineux sont prévus pour entraîner en pivotement le premier module lumineux (120) en fonction du pivotement du deuxième module lumineux (140),
ledit dispositif lumineux comprenant en outre un dispositif d'actionnement (170), configuré pour exercer une première force (F1), selon une première direction, sur le deuxième module lumineux (140), les éléments d'entraînement (130, 150) étant configurés pour transformer la première force (F1) en une deuxième force (F2) exercée, selon une deuxième direction distincte de la première direction de la première force, sur le premier module lumineux (120) ; les éléments d'entraînement comprenant au moins une première platine (130) sur laquelle est fixé le deuxième module lumineux (140), la première platine étant montée pivotante sur le support (110) autour du deuxième axe de rotation (BB'), et une deuxième platine (150) configurée pour exercer la deuxième force (F2) selon la deuxième direction sur le premier module lumineux (120), la deuxième platine (150) est montée pivotante sur le support (110), autour d'un troisième axe de rotation (CC'),
**caractérisé en ce que** la deuxième platine (150) est reliée à la première platine par l'intermédiaire d'une liaison glissière (160) comprenant un jeu pour permettre l'entrainement de la deuxième platine (150) par la première platine (130).

2. Dispositif lumineux selon la revendication précédente, **caractérisé en ce que** la première direction selon laquelle est exercée la première force (F1) et la deuxième direction selon laquelle est exercée la deuxième force (F2) sont perpendiculaires.

3. Dispositif lumineux selon l'une des revendications 1 ou 2, **caractérisé en ce que** le premier axe de rotation (AA') est parallèle au deuxième axe de rotation (BB').

4. Dispositif selon l'une des revendications précédentes, **caractérisé en ce que** le dispositif d'actionnement (170) est configuré pour exercer la première force (F1), selon la première direction, sur le deuxième module lumineux (120) par l'intermédiaire de la première platine (130).

5. Dispositif lumineux selon l'une des revendications précédentes, **caractérisé en ce que** le troisième axe de rotation (CC') est parallèle au deuxième axe de rotation (BB').

6. Dispositif lumineux selon l'une des revendications précédentes, **caractérisé en ce que** l'axe de la liaison glissière (160) est sensiblement perpendiculaire au deuxième axe de rotation (BB') défini par les éléments de pivotement (133, 134) du deuxième module lumineux (140) et à la première direction selon laquelle est exercée la première force (F1).

7. Dispositif lumineux selon l'une des revendications précédentes, en combinaison avec la revendication 3, **caractérisé en ce que** la liaison glissière (160) est située entre le premier axe de rotation (AA') et le troisième axe de rotation (CC').

8. Dispositif lumineux selon l'une des revendications précédentes, **caractérisé en ce que** le dispositif d'actionnement (170) exerce la première force (F1) sur la première platine (130) en un point réglable (171), la liaison glissière étant centrée sur un quatrième axe (DD') défini entre ce point réglable et un élément de pivotement (134) du deuxième module lumineux (140).

9. Dispositif lumineux selon l'une des revendications 1 à 6, **caractérisé en ce que** la deuxième platine (150) comprend un appendice (155) destiné à appliquer la deuxième force (F2) sur le premier module lumineux (120), via un organe de liaison (157), et **en ce que** l'appendice est configuré pour que l'organe de liaison (157) soit disposé entre le premier axe de rotation (AA') et le troisième axe de rotation (CC').

10. Dispositif lumineux selon l'une des revendications précédentes, **caractérisé en ce que** la deuxième platine (150) comprend un plateau (156) servant de support pour un dispositif de ventilation (180) d'au moins le premier module lumineux (120).

11. Dispositif lumineux selon l'une des revendications précédentes, **caractérisé en ce que** les éléments d'entraînement (130, 150, 160) sont en retrait des faces avant (123, 143) des modules lumineux (120, 140) émettant de la lumière.

## Patentansprüche

1. Leuchtvorrichtung (100) für Kraftfahrzeug umfassend einen Träger (110), ein erstes Leuchtmodul (120) und ein zweites Leuchtmodul (140), das vom ersten Leuchtmodul verschieden ist, wobei jedes Leuchtmodul mittels Schwenkelementen (121, 122, 133, 134) auf dem Träger (110) angebracht ist, die eine erste Drehachse (AA') und eine zweite Drehachse (BB') definieren, die jedem der Module eigen sind, und wobei Antriebselemente, die die zwei Leuchtmodule verbinden, dafür vorgesehen sind, das erste Leuchtmodul (120) in Abhängigkeit von der Schwenkung des zweiten Leuchtmoduls (140) zu schwenken,
wobei die Leuchtvorrichtung ferner eine Betätigungsvorrichtung (170) umfasst, die dazu ausgebildet ist, eine erste Kraft (F1) in einer ersten Richtung auf das zweite Leuchtmodul (140) auszuüben, wobei die Antriebselemente (130, 150) dazu ausgebildet sind, die erste Kraft (F1) in eine zweite Kraft (F2) umzuwandeln, die in einer zweiten Richtung, die von der ersten Richtung der ersten Kraft verschieden ist, auf das erste Leuchtmodul (120) ausgeübt wird;
wobei die Antriebselemente wenigstens eine erste Platte (130), auf der das zweite Leuchtmodul (140) befestigt ist, wobei die erste Platte auf dem Träger (110) um die zweite Drehachse (BB') schwenkbar gelagert ist, und eine zweite Platte (150) umfasst, die dazu ausgebildet ist, die zweite Kraft (F2) in der zweiten Richtung auf das erste Leuchtmodul (120) auszuüben, die zweite Platte (150) auf dem Träger (110) um eine dritte Drehachse (CC') schwenkbar gelagert ist,
**dadurch gekennzeichnet, dass** die zweite Platte (150) mit der ersten Platte mittels einer Gleitverbindung (160) verbunden ist, die ein Spiel umfasst, um den Antrieb der zweiten Platte (150) durch die erste Platte (130) zu ermöglichen.

2. Leuchtvorrichtung nach dem vorhergehenden Anspruch, **dadurch gekennzeichnet, dass** die erste Richtung, in der die erste Kraft (F1) ausgeübt wird, und die zweite Richtung, in der die zweite Kraft (F2) ausgeübt wird, senkrecht zueinander verlaufen.

3. Leuchtvorrichtung nach einem der Ansprüche 1 oder 2, **dadurch gekennzeichnet, dass** die erste Drehachse (AA') parallel zur zweiten Drehachse (BB') verläuft.

4. Vorrichtung nach einem der vorhergehenden Ansprüche, **dadurch gekennzeichnet, dass** die Betätigungsvorrichtung (170) dazu ausgebildet ist, die erste Kraft (F1) in der ersten Richtung auf das zweite Leuchtmodul (120) mittels der ersten Platte (130) auszuüben.

5. Leuchtvorrichtung nach einem der vorhergehenden Ansprüche, **dadurch gekennzeichnet, dass** die dritte Drehachse (CC') parallel zur zweiten Drehachse (BB') verläuft.

6. Leuchtvorrichtung nach einem der vorhergehenden Ansprüche, **dadurch gekennzeichnet, dass** die Achse der Gleitverbindung (160) im Wesentlichen senkrecht zur zweiten Drehachse (BB'), die von den Schwenkelementen (133, 134) des zweiten Leuchtmoduls (140) definiert ist, und zur ersten Richtung, in der die erste Kraft (F1) ausgeübt wird, verläuft.

7. Leuchtvorrichtung nach einem der vorhergehenden Ansprüche in Kombination mit Anspruch 3, **dadurch gekennzeichnet, dass** sich die Gleitverbindung (160) zwischen der ersten Drehachse (AA') und der dritten Drehachse (CC') befindet.

8. Leuchtvorrichtung nach einem der vorhergehenden Ansprüche, **dadurch gekennzeichnet, dass** die Betätigungsvorrichtung (170) die erste Kraft (F1) auf die erste Platte (130) an einem einstellbaren Punkt (171) ausübt, wobei die Gleitverbindung auf einer vierten Achse (DD') zentriert ist, die zwischen diesem einstellbaren Punkt und einem Schwenkelement (134) des zweiten Leuchtmoduls (140) definiert ist.

9. Leuchtvorrichtung nach einem der Ansprüche 1 bis 6, **dadurch gekennzeichnet, dass** die zweite Platte (150) einen Anhang (155) umfasst, der dazu bestimmt ist, die zweite Kraft (F2) auf das erste Leuchtmodul (120) über ein Verbindungsglied (157) auszuüben, und dadurch, dass der Anhang dazu ausgebildet ist, dass das Verbindungsglied (157) zwischen der ersten Drehachse (AA') und der dritten Drehachse (CC') angeordnet ist.

10. Leuchtvorrichtung nach einem der vorhergehenden Ansprüche, **dadurch gekennzeichnet, dass** die zweite Platte (150) einen Halter (156) umfasst, der als Träger für eine Vorrichtung zur Belüftung (180) wenigstens des ersten Leuchtmoduls (120) dient.

11. Leuchtvorrichtung nach einem der vorhergehenden Ansprüche, **dadurch gekennzeichnet, dass** die Antriebselemente (130, 150, 160) von den Vorderseiten (123, 143) der Leuchtmodule (120, 140), die Licht emittieren, zurückgesetzt sind.

## Claims

1. Lighting device (100) for a motor vehicle, comprising a support (110), a first lighting module (120) and a second lighting module (140) distinct from the first lighting module, each lighting module being mounted om the support (110) via pivoting elements (121, 122, 133, 134) defining a first axis of rotation (AA') and a second axis of rotation (BB') which are specific to each of the modules, and wherein drive elements connecting the two lighting modules are provided for driving the first lighting module (120) in pivoting according to the pivoting of the second lighting module (140),
said lighting device further comprising an actuating device (170) configured to apply a first force (F1), in a first direction, to the second lighting module (140), the drive elements (130, 150) being configured to convert the first force (F1) into a second force (F2) applied, in a second direction distinct from the first direction of the first force, to the first lighting module (120);
the drive elements comprising at least a first mount (130) to which the second lighting module (140) is fixed, the first mount being mounted with the ability to pivot on the support (110) about the second axis of rotation (BB'), and a second mount (150) configured to apply the second force (F2) in the second direction to the first lighting module (120), the second mount (150) is mounted with the ability to pivot on the support (110) about a third axis of rotation (CC'),
**characterized in that** the second mount (150) is connected to the first mount via a slideway connection (160) with clearance to allow the second mount (150) to be driven by the first mount (130).

2. Lighting device according to the preceding claim, **characterized in that** the first direction in which the first force (F1) is applied and the second direction in which the second force (F2) is applied are perpendicular.

3. Lighting device according to one of Claims 1 and 2, **characterized in that** the first axis of rotation (AA') is parallel to the second axis of rotation (BB').

4. Device according to one of the preceding claims, **characterized in that** the actuating device (170) is configured to apply the first force (F1), in the first direction, to the second lighting module (120) via the first mount (130).

5. Lighting device according to one of the preceding claims, **characterized in that** the third axis of rotation (CC') is parallel to the second axis of rotation (BB').

6. Lighting device according to one of the preceding claims, **characterized in that** the axis of the slideway connection (160) is substantially perpendicular to the second axis of rotation (BB') defined by the pivoting elements (133, 134) of the second lighting module (140) and to the first direction in which the first force (F1) is applied.

7. Lighting device according to one of the preceding claims in combination with Claim 3, **characterized in that** the slideway connection (160) is situated between the first axis of rotation (AA') and the third axis of rotation (CC').

8. Lighting device according to one of the preceding claims, **characterized in that** the actuating device (170) applies the first force (F1) to the first mount (130) at an adjustable point (171), the slideway connection being centred on a fourth axis (DD') defined between this adjustable point and a pivoting element (134) of the second lighting module (140) .

9. Lighting device according to one of Claims 1 to 6, **characterized in that** the second mount (150) comprises an appendage (155) intended to apply the second force (F2) to the first lighting module (120) via a connecting member (157), and **in that** the appendage is configured so that the connecting member (157) is positioned between the first axis of rotation (AA') and the third axis of rotation (CC') .

10. Lighting device according to one of the preceding claims, **characterized in that** the second mount (150) comprises a plate (156) acting as a support for a ventilation device (180) for ventilating at least the first lighting module (120).

11. Lighting device according to one of the preceding claims, **characterized in that** the drive elements (130, 150, 160) are set back from the light-emitting front faces (123, 143) of the lighting modules (120, 140) .
